# EUROPÄISCHE PATENTSCHRIFT

(11) **EP 4 139 163 B1**
(45) Veröffentlichungstag und Bekanntmachung des Hinweises auf die Patenterteilung: **01.10.2025**
(21) Anmeldenummer: 21721439.4
(22) Anmeldetag: 21.04.2021
(51) Int. Cl.: B60N 2/08, B60N 2/16, B60N 2/07, B60N 2/18

(54) **FAHRZEUGSITZ MIT EINEM KINEMATIKHEBEL**
VEHICLE SEAT WITH A KINEMATIC LEVER
SIÈGE DE VÉHICULE DOTÉ D'UN LEVIER CINÉMATIQUE

(30) Priorität: 22.04.2020 DE 102020205108; 22.04.2020 DE 102020205107
(43) Veröffentlichungstag der Anmeldung: 01.03.2023
(73) Patentinhaber: Brose Fahrzeugteile SE & Co. Kommanditgesellschaft, Coburg, 96450 Coburg (DE)
(72) Erfinder: MEYER, Enno, 96253 Untersiemau (DE); RISSE, Roberto, 98673 Eisfeld (DE); BLÜTHGEN, Björn, 96450 Coburg (DE); SCHOLZ, Jonas, 98630 Römhild (DE)
(74) Vertreter: Maikowski & Ninnemann Patentanwälte Partnerschaft mbB
(86) Internationale Anmeldenummer: PCT/EP2021/060354
(87) Internationale Veröffentlichungsnummer: WO 2021/214127

(56) Entgegenhaltungen:
- WO-A1-2014/077390
- WO-A2-2019/096774
- FR-A- 1 182 137
- FR-A1- 2 376 008
- FR-A1- 2 917 679

## Beschreibung

Die Erfindung betrifft einen Fahrzeugsitz nach dem Oberbegriff des Anspruchs 1.

Ein Fahrzeugsitz nach dem Oberbegriff des Anspruchs 1 umfasst ein Sitzteil mit einem Sitzteilelement, eine Basis, eine Kinematikeinrichtung mit einem Kinematikhebel, über den zumindest das Sitzteilelement relativ zur Basis bewegbar mit der Basis verbunden ist, und eine weitere Einrichtung mit einer unabhängig vom Kinematikhebel bewegbar gelagerten Komponente.

Die WO 2019/096774 A2 beschreibt einen derartigen Fahrzeugsitz. Dabei dient die Kinematikeinrichtung zur Verstellung der Sitzhöhe des Fahrzeugsitzes, sowie für einen vereinfachten Einstieg in eine hinter dem Fahrzeugsitz gelegene Sitzreihe, stellt also eine Easy-Entry-Funktion bereit. Mittels eines Drehschubgelenks ist das Sitzteil mitsamt eines Rückenlehnenteils zusätzlich nach vorn (in eine Easy-Entry-Stellung) bewegbar, sodass ein besonders komfortabler Einstieg in die hintere Sitzreihe möglich ist. Eine weitere Einrichtung in Form einer Längsverstelleinrichtung umfasst eine unabhängig von Kinematikhebeln der Kinematikeinrichtung bewegbar gelagerte Komponente in Form einer Schiene. Die Hebel können so ausgelegt werden, dass der Fahrzeugsitz durch sein Eigengewicht in der Easy-Entry-Stellung gehalten ist, auch wenn das Fahrzeug mit dem Fahrzeugsitz z.B. bergan steht. Das ermöglicht einen einfachen und komfortablen Einstieg in eine hintere Sitzreihe.

Abhängig vom jeweiligen Einsatzort, also insbesondere der Form und Größe einer Türöffnung eines Fahrzeuges mit dem Fahrzeugsitz, kann es wünschenswert sein, einen möglichst großen Einstiegsbereich freizugeben. Denkbar sind hierfür Fahrzeugsitze, die z.B. ein Vorklappen einer Rückenlehne mit einer Entriegelung einer Längsverstelleinrichtung kombinieren. Derartige Lösungen sind allerdings regelmäßig verhältnismäßig aufwändig in der Herstellung. In anderen Fahrzeugen ist eine verhältnismäßig geringfügige Verlagerung des Fahrzeugsitzes bereits ausreichend. In derartigen Fällen verlagert sich der Fahrzeugsitz aber infolge seiner Gewichtskraft oftmals selbsttätig zurück aus der Easy-Entry-Stellung in Richtung einer Gebrauchsstellung, wenn das Fahrzeug bergan steht. Dies kann einen Einstieg erschweren.

Weitere Fahrzeugsitze sind in den Dokumenten WO 2014/077390 A1, FR 2 917 679 A1, FR 2 376 008 A1 und FR 1 182 137 A beschrieben.

Aufgabe der vorliegenden Erfindung ist es, einen verbesserten Fahrzeugsitz anzugeben.

Diese Aufgabe wird durch einen Gegenstand mit den Merkmalen des Anspruchs 1 gelöst.

Danach ist vorgesehen, dass der Kinematikhebel einen Betätigungsabschnitt aufweist, mittels dem ein bewegbar gelagertes Element innerhalb eines Teilabschnitts der Bewegung des Kinematikhebels derart betätigbar ist, dass es eine Bewegung der Komponente der weiteren Einrichtung freigibt und/oder bewirkt.

Der Kinematikhebel erfüllt somit eine Doppelfunktion, indem er einerseits das Sitzteilelement bewegbar mit der Basis verbindet und andererseits den Betätigungsabschnitt aufweist. So ist es in besonders einfacher Weise und unter Verwendung verhältnismäßig weniger Bauteile möglich, den Fahrzeugsitz mit zwei Einrichtungen, die verschiedene Freiheitsgrade aufweisen, z.B. verschiedene, voneinander unabhängige Verstellbahnen beschreiben, in eine besonders weit vor verlagerte Easy-Entry-Stellung zu überführen. Durch die geringe Anzahl nötiger Bauteile sind besonders wenige Fertigungs- und Montageschritte nötig.

Bei dem Sitzteilelement handelt es sich z.B. um einen Sitzrahmen oder einen Teil davon, oder um eine Sitzwanne, insbesondere eine an einem Rahmen des Sitzteils gelagerte, z.B. absenkbare Sitzwanne. Die weitere Einrichtung ist beispielsweise außerhalb des Kraftpfades zwischen dem Sitzteilelement und/oder dem Sitzteil und der Basis angeordnet.

Zumindest das Sitzteilelement, optional das Sitzteil, ist z.B. über den Kinematikhebel an der Basis abgestützt. Der Kinematikhebel stützt insbesondere eine Gewichtskraft des Sitzteils selbst und/oder eines auf dem Sitzteil sitzenden Sitzbenutzers ab. Die Kinematikeinrichtung trägt beispielsweise das Sitzteilelement, insbesondere das Sitzteil. Die weitere Einrichtung ist kein unmittelbarer Teil der Kinematikeinrichtung.

Optional ist das durch den Betätigungsabschnitt des Kinematikhebels betätigbare Element Teil einer Verriegelungsvorrichtung oder einer Betätigungsvorrichtung. Je nach der Stellung des Kinematikhebels kann also automatisch eine weitere Verstellbewegung freigegeben oder ausgelöst werden. So kann mittels des Betätigungsabschnitts z.B. in einfacher Weise ein Schloss geöffnet oder ein Bowden gezogen werden.

In einer Ausgestaltung umfasst die Verriegelungsvorrichtung ferner einen z.B. manuell betätigbaren Entriegelungshebel. Dabei kann insbesondere vorgesehen sein, dass mittels des Entriegelungshebels unabhängig von der Stellung des Kinematikhebels ebenfalls das Element der Verriegelungsvorrichtung betätigbar ist. Dieses Element kann also selektiv mittels des Kinematikhebels oder mittels des Entriegelungshebels betätigt werden. Hierdurch kann dieselbe Verriegelungsvorrichtung sowohl automatisch als auch manuell entriegelbar sein.

Beispielsweise ist der Fahrzeugsitz mittels der Kinematikeinrichtung zwischen zumindest einer einsitzbaren Gebrauchsstellung und einer Easy-Entry-Stellung und/oder zwischen mehreren einsitzbaren Gebrauchsstellungen (insbesondere mit verschiedenen Sitzhöhen) bewegbar. Somit kann die Kinematikeinrichtung optional als Easy-Entry-Mechanismus dienen, alternativ oder zusätzlich als Höhenverstelleinrichtung zur Einstellung einer Sitzhöhe des Fahrzeugsitzes.

In einer Weiterbildung ist der Kinematikhebel, insbesondere der Betätigungsabschnitt des Kinematikhebels, in der Gebrauchsstellung beabstandet zum betätigbaren Element angeordnet und steht in der Easy-Entry-Stellung in Berührung mit dem betätigbaren Element. Ferner sei angemerkt, dass ganz allgemein vorgesehen sein kann, dass der Kinematikhebel in zumindest einer Stellung beabstandet zum betätigbaren Element angeordnet ist und in zumindest einer anderen Stellung in Berührung mit dem betätigbaren Element steht. Auf diese Weise kann ermöglicht werden, dass in einer vorgegebenen Stellung des Sitzteils oder zumindest des Sitzteilelements eine weitere Funktion ausgelöst oder freigegeben wird.

Beispielsweise wird zunächst eine Easy-Entry-Verriegelung entriegelt, sodass das Sitzteil mit dem Rückenlehnenteil mittels der Kinematikeinrichtung vorgeschwenkt werden kann oder mittels einer Federkraft automatisch vorschwenkt. Sobald das Sitzteil mit dem Rückenlehnenteil bis zu einer bestimmten Position vorgeschwenkt sind, entriegelt der Kinematikhebel mit dem Betätigungsabschnitt automatisch eine weitere mechanische Funktion, die eine von der Kinematikeinrichtung unabhängige Bewegung ausführt und z.B. zusätzlich dazu beiträgt, einen möglichst komfortablen Einstieg in die hintere Sitzreihe zu erlauben. Dementsprechend ist in einer Ausgestaltung vorgesehen, dass die Kinematikeinrichtung ein Verriegelungselement umfasst, mittels dem der Fahrzeugsitz in der zumindest einen Gebrauchsstellung verriegelbar ist. Dabei ist optional vorgesehen, dass das Verriegelungselement beabstandet vom durch den Betätigungsabschnitt des Kinematikhebels betätigbaren Element ist.

Optional bildet die Kinematikeinrichtung ein Viergelenk aus. Dabei stellt die Basis z.B. das Gestell dar und das Sitzteilelement die Koppel, während der Kinematikhebel eine Schwinge darstellt und die Kinematikeinrichtung eine weitere Schwinge umfasst. Das Viergelenk erlaubt eine besonders einfache und zugleich äußerst robuste Bauweise. Für sich genommen ermöglicht ein Viergelenk typischerweise nur eine vergleichsweise geringe Verlagerung des Sitzteils nach vorn, sofern nicht besonders lange Schwingen eingesetzt werden. Das ist aber in vielen Fällen nicht möglich, weil sonst der Fahrzeugsitz mit einem Fahrzeughimmel kollidieren würde. In einer Ausgestaltung ist das bewegbar gelagerte Element mittels dem Betätigungsabschnitt des Kinematikhebels derart betätigbar, dass es eine Bewegung der Komponente der weiteren Einrichtung bewirkt, wobei die Komponente z.B. eine Kopfstütze des Fahrzeugsitzes ist, die dadurch z.B. eingezogen oder umgeklappt wird, sodass eine Kollision mit einem Fahrzeughimmel oder einem Armaturenbrett verhindert wird.

Die weitere Einrichtung ist z.B. eine Verstelleinrichtung und umfasst zwei relativ zueinander bewegbare Komponenten als Verstellteile. Somit kann mittels des Kinematikhebels eine Verstellung der Verstelleinrichtung freigegeben und/oder bewirkt werden. Bei einer Verstellung der Verstellteile relativ zueinander wird die Kinematikeinrichtung (insbesondere gemeinsam mit dem Sitzteil und/oder der Basis) mitgenommen.

Konkret ist die weitere Einrichtung beispielsweise eine Längsverstelleinrichtung und die zwei relativ zueinander bewegbaren Verstellteile sind relativ zueinander verschiebbar gelagert. So kann der Fahrzeugsitz für eine Easy-Entry-Stellung in einfacher Weise besonders weit vorverlagert werden.

Das Element der weiteren Einrichtung ist optional infolge einer Betätigung durch den Betätigungsabschnitt des Kinematikhebels aus einer die Verstellteile miteinander verriegelnden Verriegelungsstellung in eine Entriegelungsstellung bewegbar, in der die Verstellteile relativ zueinander bewegbar sind.

Eines der Verstellteile bildet in einer Ausgestaltung die Basis aus und/oder ist fest mit der Basis verbunden. Dies ermöglicht einen einfachen Aufbau.

Der Betätigungsabschnitt ist beispielsweise an einem vom übrigen Kinematikhebel abstehenden Teil ausgebildet. Optional ist der abstehende Teil des Kinematikhebels hakenförmig ausgebildet. Hierdurch ist eine besonders präzise Betätigung möglich.

Der Betätigungsabschnitt weist eine Funktionsfläche auf. Der Betätigungsabschnitt kann so ausgebildet sein, dass die Funktionsfläche bei einer Betätigung am Element der weiteren Einrichtung entlang gleitet. Hierdurch ist eine leichtgängige Betätigung möglich.

In einer Weiterbildung bildet die Funktionsfläche des Betätigungsabschnitts mit dem Element der weiteren Einrichtung, in einer Richtung betrachtet, stetig kleiner werdende Reibwinkel aus. Hierdurch können Toleranzen in der Herstellung und der Montage der Bauteile ausgeglichen werden.

Der Kinematikhebel ist z.B. über (insbesondere genau) zwei Schwenklager schwenkbar gelagert. Optional ist vorgesehen, dass die Funktionsfläche zu einem der Schwenklager einen größeren Abstand aufweist als die beiden Schwenklager zueinander. Beispielsweise umgreift der Betätigungsabschnitt eines der Schwenklager in der Draufsicht entlang einer der entsprechenden Schwenkachsen.

Bei einem Fahrzeugsitz, umfassend ein Sitzteil mit einem Sitzteilelement, eine Basis und eine Kinematikeinrichtung mit einem Kinematikhebel, über den zumindest das Sitzteilelement relativ zur Basis bewegbar mit der Basis verbunden ist, kann vorgesehen sein, dass der Kinematikhebel einen Verriegelungsabschnitt aufweist, der dazu ausgebildet ist in zumindest einer Stellung des Kinematikhebels mit einem Gegenverriegelungselement zusammenzuwirken, insbesondere damit verrastbar ist.

Der Kinematikhebel erfüllt somit eine Doppelfunktion, indem er einerseits das Sitzteilelement bewegbar mit der Basis verbindet und andererseits den Verriegelungsabschnitt aufweist. So ist es in besonders einfacher Weise und unter Verwendung verhältnismäßig weniger Bauteile möglich, eine Bremsung und/oder Verrastung des Sitzteilelements zu bewirken, die beispielsweise eine unbeabsichtigte Verlagerung des Sitzteils verhindert. Durch die geringe Anzahl nötiger Bauteile sind besonders wenige Fertigungs- und Montageschritte nötig.

Optional weist dieser Fahrzeugsitz eines, mehrere oder alle Merkmale des vorher beschriebenen Fahrzeugsitzes auf. Bei dem Sitzteilelement handelt es sich wiederum z.B. um einen Sitzrahmen oder einen Teil davon, oder um eine Sitzwanne, insbesondere eine an einem Rahmen des Sitzteils gelagerte, z.B. absenkbare Sitzwanne. Die weitere Einrichtung ist beispielsweise außerhalb des Kraftpfades zwischen dem Sitzteilelement und/oder dem Sitzteil und der Basis angeordnet.

Zumindest das Sitzteilelement, optional das Sitzteil, ist z.B. über den Kinematikhebel an der Basis abgestützt. Der Kinematikhebel stützt insbesondere eine Gewichtskraft des Sitzteils selbst und/oder eines auf dem Sitzteil sitzenden Sitzbenutzers ab. Die Kinematikeinrichtung trägt beispielsweise das Sitzteilelement, insbesondere das Sitzteil.

Beispielsweise ist der Fahrzeugsitz mittels der Kinematikeinrichtung zwischen zumindest einer einsitzbaren Gebrauchsstellung und einer vorverlagerten Stellung bewegbar. Somit kann die Kinematikeinrichtung als Easy-Entry-Mechanismus dienen, optional zusätzlich als Höhenverstelleinrichtung zur Einstellung einer Sitzhöhe des Fahrzeugsitzes.

Der Verriegelungsabschnitt des Kinematikhebels kann in der vorverlagerten Stellung der Kinematikeinrichtung mit dem Gegenverriegelungselement reibschlüssig und/oder formschlüssig festhaltbar sein, insbesondere verrastbar sein. Somit kann mittels einer Halterung, insbesondere Verrastung die vorverlagerte Stellung gehalten werden.

Optional ist der Kinematikhebel durch eine Bewegung des Fahrzeugsitzes aus der vorverlagerten, z.B. vorgeschwenkten Stellung zurück in Richtung der zumindest einen Gebrauchsstellung derart relativ zur Basis schwenkbar, dass der Verriegelungsabschnitt aus einem Zusammenwirken, insbesondere einer Verrastung mit dem Gegenverriegelungselement gelöst wird. Dies ermöglicht es, das Zusammenwirken, insbesondere die Verrastung komfortabel zu lösen, wenn der Fahrzeugsitz in Richtung der Gebrauchsstellung zurück verlagert wird, z.B. ohne dass eine Lösekraft zum Lösen, z.B. der Verrastung, überwunden werden muss.

Optional bildet die Kinematikeinrichtung ein Viergelenk aus. Dabei stellt die Basis z.B. das Gestell dar und das Sitzteilelement die Koppel, während der Kinematikhebel eine Schwinge darstellt und die Kinematikeinrichtung eine weitere Schwinge umfasst. Das Viergelenk erlaubt eine besonders einfache und zugleich äußerst robuste Bauweise.

Der Fahrzeugsitz kann ferner eine Verstelleinrichtung mit zwei relativ zueinander bewegbaren Verstellteilen umfassen. Dabei kann vorgesehen sein, dass eines der Verstellteile zumindest einen Teil der Basis ausbildet und das Gegenverriegelungselement am anderen der Verstellteile montiert ist. Somit ist die Kinematikeinrichtung samt Sitzteil mittels der Verstelleinrichtung verstellbar.

In einer Weiterbildung ist vorgesehen, dass der Verriegelungsabschnitt und das Gegenverriegelungselement dazu ausgebildet sind, in einem miteinander zusammenwirkenden, insbesondere verrasteten Zustand eine Bewegbarkeit der Verstellteile der Verstelleinrichtung relativ zueinander zu begrenzen, zu erschweren (insbesondere zu bremsen) oder zu verhindern. Zum Beispiel ist die Verrastung durch Überschreitung einer vorgegebenen Kraft auf eines der Verstellteile lösbar. Ferner ist das Zusammenwirken, insbesondere die Verrastung wie oben bereits erläutert z.B. durch Schwenken des Kinematikhebels lösbar.

Die Verstellteile sind z.B. über einen Verstellweg relativ zueinander bewegbar. Der Verriegelungsabschnitt und das Gegenverriegelungselement können dazu ausgebildet sein, die Verstellteile an einem Ende des Verstellwegs miteinander zu verriegeln. Hierdurch kann der Fahrzeugsitz komfortabel in der Endlage gehalten werden.

Beispielsweise handelt es sich bei der Verstelleinrichtung um eine Längsverstelleinrichtung, wobei die Verstellteile insbesondere in Form einer oberen Schiene und einer unteren Schiene ausgebildet sein können. So ist eine besonders weit vorverlagerte Easy-Entry-Stellung möglich, die dennoch komfortabel und unter Einsatz weniger Teile einrastet.

Konkret kann vorgesehen sein, dass der Fahrzeugsitz aus zumindest einer einsitzbaren Gebrauchsstellung heraus zunächst mittels der Kinematikeinrichtung in eine vorverlagerte, z.B. vorgeschwenkte Stellung bewegbar und anschließend mittels der Verstelleinrichtung längs nach vorn bewegbar ist, bis der Verriegelungsabschnitt des Kinematikhebels mit dem Gegenverriegelungselement zusammenwirkt, insbesondere verrastet.

Optional weist der Kinematikhebel ferner einen Betätigungsabschnitt auf, mittels dem z.B. ein bewegbar gelagertes Entriegelungselement derart betätigbar ist, dass es eine Bewegung der Verstellteile der Verstelleinrichtung relativ zueinander freigibt. Je nach der Stellung des Kinematikhebels kann also automatisch eine weitere Verstellbewegung freigegeben werden. So kann der Kinematikhebel als eine Art zentrales Steuerelement dienen, welches nach Abschluss der Schwenkbewegung mittels der Kinematikeinrichtung eine Längsverschiebung mittels der Längsverstelleinrichtung freigibt und schließlich in einer Endlage bremst und/oder verrastet. Diese Bewegung kann z.B. manuell in einem fließenden Bewegungsablauf erfolgen oder mit einer einzigen Antriebseinheit.

Der Verriegelungsabschnitt ist beispielsweise an einem vom übrigen Kinematikhebel abstehenden Teil ausgebildet. Das ermöglicht z.B. eine Verrastung wenn das Gegenverriegelungselement versetzt angeordnet ist. Konkret ist der Verriegelungsabschnitt beispielsweise in Form eines Vorsprungs ausgebildet, der z.B. vom abstehenden Teil vorsteht. Der Vorsprung kann in einfacher und robuster Weise über eine Rastkontur des Gegenverriegelungselements gleiten.

Optional ist der abstehende Teil des Kinematikhebels hakenförmig ausgebildet und/oder bildet auch den Betätigungsabschnitt aus. Hierdurch ist eine besonders präzise Betätigung bzw. ein besonders einfacher Aufbau möglich.

Der Kinematikhebel ist z.B. über (insbesondere genau) zwei Schwenklager schwenkbar gelagert ist. Optional ist vorgesehen, dass der Verriegelungsabschnitt zu einem der Schwenklager einen größeren Abstand aufweist als die beiden Schwenklager zueinander. Beispielsweise umgreift der Betätigungsabschnitt eines der Schwenklager in der Draufsicht entlang einer der entsprechenden Schwenkachsen.

In einer Ausgestaltung ist das Gegenverriegelungselement federelastisch ausgebildet, z.B. in Form einer Feder, insbesondere einer mit einer Rastkontur versehenen Feder, z.B. Blattfeder. Alternativ dazu ist das Gegenverriegelungselement starr ausgebildet. Optional ist dann der Verriegelungsabschnitt des Kinematikhebels federelastisch ausgebildet.

Der der Erfindung zugrundeliegende Gedanke soll nachfolgend anhand der in den Figuren dargestellten Ausführungsbeispielen näher erläutert werden. Es zeigen in schematischen Darstellungen:
- Fig. 1: eine Ansicht eines Fahrzeugsitzes mit einem Sitzteil und einer Rückenlehne;
- Fig. 2A-2C: Seitenansichten eines Sitzteilelements des Sitzteils und einer Kinematikeinrichtung in verschiedenen Stellungen relativ zu einer weiteren Einrichtung in Form einer Längsverstelleinrichtung;
- Fig. 3: eine gegenüber Fig. 2A um 90 Grad gedrehte Ansicht des Sitzteilelements und der Längsverstelleinrichtung;
- Fig. 4: eine Ansicht eines Kinematikhebels der Kinematikeinrichtung mit einem gekrümmten Betätigungsabschnitt;
- Fig. 5: eine Ansicht eines Fahrzeugsitzes mit einem Sitzteil und einer Rückenlehne;
- Fig. 6A-6C: Seitenansichten eines Sitzteilelements des Sitzteils und einer Kinematikeinrichtung in verschiedenen Stellungen relativ zu einer Längsverstelleinrichtung;
- Fig. 7-10: verschiedene Ansichten eines Verriegelungsabschnitts eines Kinematikhebels der Kinematikeinrichtung und eines Gegenverriegelungselements; und
- Fig. 11: eine Ansicht des Kinematikhebels der Kinematikeinrichtung.

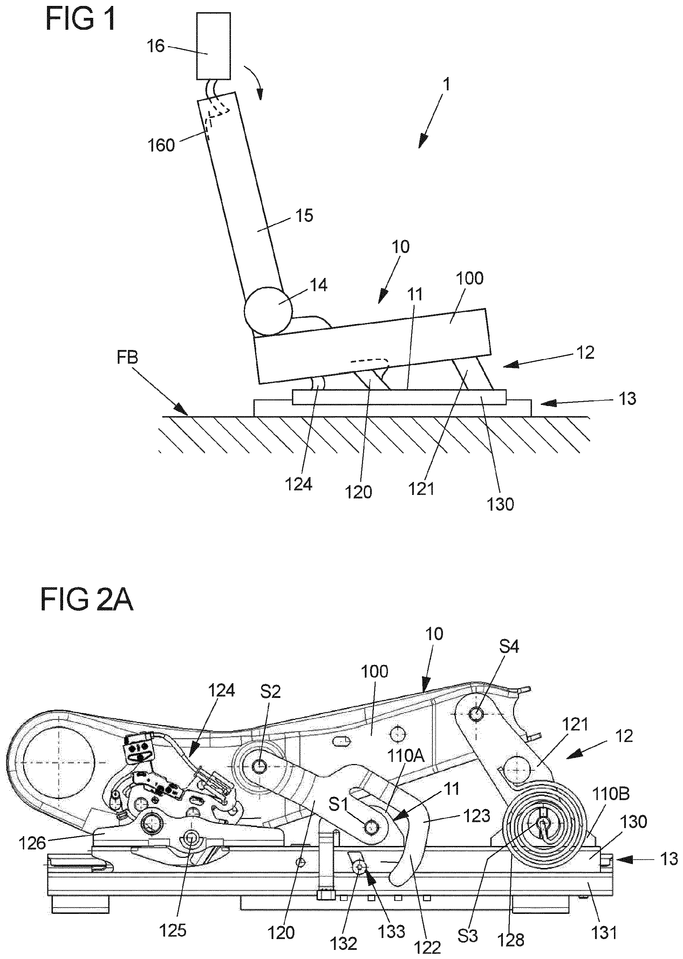

Ein in Fig. 1 schematisch dargestellter Fahrzeugsitz 1 für ein Kraftfahrzeug weist ein Sitzteil 10 und ein über eine Anordnung von Drehbeschlägen 14 schwenkbar zu dem Sitzteil 10 angeordnetes Rückenlehnenteil 15 auf. Auf dem Sitzteil 10 kann ein Sitzbenutzer Platz nehmen. Über die Anordnung von Drehbeschlägen 14 kann das Rückenlehnenteil 15 relativ zu dem Sitzteil 10 verschwenkt werden, um die Neigungsstellung des Rückenlehnenteils 15 zu dem Sitzteil 10 anzupassen und/oder das Rückenlehnenteil 15 in eine vorverschwenkte Stellung zu bringen.

Ein solcher Fahrzeugsitz 1 kann als Vordersitz in einem Fahrzeug ausgebildet sein. Ein solcher Fahrzeugsitz 1 kann aber auch z.B. als Rücksitz, beispielsweise in zweiter Sitzreihe, in einem Fahrzeug verwendet werden.

Bei dem dargestellten Beispiel ist das Sitzteil 10 des Fahrzeugsitzes 1 über eine Kinematikeinrichtung 12 mit einer Basis 11 gekoppelt. Die Basis 11 trägt das Sitzteil 10. Da im gezeigten Beispiel das Rückenlehnenteil 15 am Sitzteil 10 gelagert ist, trägt die Basis 11 somit auch das Rückenlehnenteil 15. Eine Gewichtskraft des Sitzteils 10 (und des Rückenlehnenteils 15) und, sofern ein Sitzbenutzer auf dem Fahrzeugsitz 1 Platz nimmt auch eine Gewichtskraft des Sitzbenutzers, wird also über die Kinematikeinrichtung 12 in die Basis 11 eingeleitet.

Der Fahrzeugsitz 1 umfasst ferner eine weitere Einrichtung, die vorliegend als Verstelleinrichtung und konkret als Längsverstelleinrichtung 13 ausgebildet ist. Über die Längsverstelleinrichtung 13 ist das Sitzteil 10 (gemeinsam mit der Kinematikeinrichtung 12, der Basis 11 und dem Rückenlehnenteil 15) längsverstellbar mit einem Fahrzeugboden FB eines Fahrzeugs verbindbar und gemäß Fig. 1 verbunden.

Vorliegend dient eine Komponente 130 der Längsverstelleinrichtung 13 gemeinsam mit Halterungen 110A, 110B als die Basis 11 für die Kinematikeinrichtung 12.

Eine Verriegelungsvorrichtung 124 der Kinematikeinrichtung 12 sichert den Fahrzeugsitz 1 in einer Gebrauchsstellung, in der der Sitzbenutzer auf dem Sitzteil 10 Platz nehmen kann. Wird diese Verriegelungsvorrichtung 124 gelöst, dann können Kinematikhebel 120, 121 der Kinematikeinrichtung 12 relativ zur Basis 11 verschwenkt werden, sodass der Fahrzeugsitz 1 aus der Gebrauchsstellung in eine demgegenüber vorgeschwenkte Einstiegsstellung überführt werden kann. Die Einstiegsstellung kann auch als Easy-Entry-Stellung bezeichnet werden. Über die Kinematikhebel 120, 121 ist das Sitzteil 10 relativ zur Basis 11 bewegbar mit der Basis 11 verbunden. Optional (oder alternativ) dient die Kinematikeinrichtung 12 zur Einstellung der Sitzhöhe und erlaubt die Einstellung verschiedener Gebrauchspositionen.

Wie nachfolgend im Zusammenhang mit den Fig. 2A bis 4 im Detail erläutert werden wird, weist einer der Kinematikhebel 120 einen Betätigungsabschnitt auf, mittels dem ein am Fahrzeugsitz 1 bewegbar angeordnetes Element derart betätigbar ist, dass eine Bewegung zumindest einer Komponente einer von der Kinematikeinrichtung 12 ansonsten unabhängigen, weiteren Einrichtung des Fahrzeugsitzes 1 freigegeben und/oder bewirkt wird. Bei dieser weiteren Einrichtung handelt es sich z.B. um die Längsverstelleinrichtung 13 oder um eine Kopfstütze 16 des Fahrzeugsitzes 1.

Fig. 2A zeigt ein Sitzteilelement 100 des Sitzteils 10, welches vorliegend ein Seitenteil eines Sitzrahmens des Sitzteils 10 ausbildet, und die zwei Kinematikhebel 120, 121 der Kinematikeinrichtung 12. Es sei erwähnt, dass das Sitzteilelement 100 alternativ auch relativ zu einem weiteren Teil des Sitzteils 10 verstellbar sein könnte, z.B. als Teil einer absenkbaren Sitzwanne.

Ferner zeigt Fig. 2A zwei unabhängig von den Kinematikhebeln 120, 121 relativ zueinander bewegbare Komponenten in Form einer oberen Schiene 130 und einer unteren Schiene 131 der Längsverstelleinrichtung 13. Die untere Schiene 131 ist mit dem Fahrzeugboden FB fest verbindbar und gemäß Fig. 1 verbunden. Die obere Schiene 130 ist an der unteren Schiene 131 entlang einer geradlinigen Verstellbahn längsverschiebbar gelagert. Über die Kinematikhebel 120, 121 ist die obere Schiene 130 mit dem Sitzteilelement 100 verbunden.

Es sei an dieser Stelle darauf hingewiesen, dass Fig. 2A eine von zwei Seiten des Fahrzeugsitzes 1 zeigt, wobei der Fahrzeugsitz 1 eine zweite, insbesondere spiegelbildlich aufgebaute zweite Seite umfasst. Die Beschreibung der in Fig. 2A gezeigten Seite gilt analog für die zweite Seite des in Fig. 1 gezeigten Fahrzeugsitzes 1.

Einer der beiden in Fig. 2A veranschaulichten Kinematikhebel 120, 121, im gezeigten Beispiel der (mit Bezug auf die Längsrichtung X des Fahrzeugkoordinatensystems) hintere Kinematikhebel 120, wird zur vereinfachten Bezugnahme nachfolgend auch als erster Kinematikhebel 120 bezeichnet, der andere als zweiter Kinematikhebel 121.

Der erste Kinematikhebel 120 ist an einer Halterung 110A der Basis 11, welche an der oberen Schiene 130 befestigt (alternativ daran ausgeformt) ist, um eine (erste) Schwenkachse S1 schwenkbar gelagert. Ferner ist der erste Kinematikhebel 120 um eine (zweite) Schwenkachse S2 am Sitzteilelement 100 schwenkbar gelagert. Der zweite Kinematikhebel 121 ist um eine (dritte) Schwenkachse S3 an einer Halterung 110B der Basis 11, welche an der oberen Schiene 130 befestigt (alternativ daran ausgeformt) ist, schwenkbar gelagert. Des Weiteren ist der zweite Kinematikhebel 121 um eine (vierte) Schwenkachse S4 schwenkbar am Sitzteilelement 100 gelagert. Gemeinsam bilden die Basis 11, die beiden Kinematikhebel 120, 121 und das Sitzteilelement 100 ein Viergelenk aus.

Fig. 2A zeigt die Gebrauchsstellung. In der Gebrauchsstellung ist die Verriegelungsvorrichtung 124 mit einem an der oberen Schiene 130 befestigten Gegenverriegelungselement, hier beispielhaft einem Bolzen 125, verriegelt. Das Gegenverriegelungselement, also hier der Bolzen 125, ist an einer Halterung 126 befestigt, welche wiederum an der oberen Schiene 130 befestigt ist. Wird die (in Längsrichtung X gesehen) hinter dem ersten Schwenkhebel 120 angeordnete Verriegelungsvorrichtung 124 der Kinematikeinrichtung 12 entriegelt, dann kann das Sitzteilelement 100 entsprechend einer durch die Kinematikeinrichtung 12 vorgegebenen Verstellbahn verstellt werden. Die von der Kinematikeinrichtung 12 vorgegebene Verstellbahn ist verschieden von der von der weiteren Einrichtung, hier der Längsverstelleinrichtung 13, vorgegebenen Verstellbahn.

Konkret kann das Sitzteilelement 100, und damit das Sitzteil 10, in die vorgeschwenkte Stellung überführt werden. Diese Bewegung wird vorliegend unterstützt durch eine vorgespannte Feder 128, welche das Sitzteilelement 100 in Richtung der Easy-Entry-Stellung vorspannt. Die Feder 128 ist in Form einer um die (dritte) Schwenkachse S3 an der Halterung 110B des zweiten Kinematikhebels 120 erstreckten Spiralfeder ausgebildet. Die Feder 128 stützt sich an der Halterung 110B und am zweiten Kinematikhebel 121 ab.

Der erste Kinematikhebel 120 weist den Betätigungsabschnitt 122 auf, mittels dem das bewegbar gelagerte Element (hier beispielhaft in Form eines Entriegelungsbolzens 132) derart betätigbar ist, dass es eine Bewegung der oberen Schiene 130 relativ zur unteren Schiene 131 freigibt. Somit ist ein Entriegelungsmechanismus in den Kinematikhebel integriert. Hierdurch sind Kosten-, Bauraum- und Gewichtsersparnisse gegenüber einer separaten Entriegelung für die Easy-Entry-Funktion möglich. Die Bewegung der entriegelten oberen Schiene 130 ist nicht an eine Bewegung des ersten Kinematikhebels 120 gekoppelt und unabhängig vom ersten Kinematikhebel bewegbar gelagert.

Vorliegend ist der Betätigungsabschnitt 122 an einem vom übrigen Kinematikhebel 120 abstehenden Arm 123 ausgebildet. Der Arm 123 steht von einem Materialbereich des ersten Schwenkarms 120 zwischen den Schwenkachsen S1, S2 seitlich ab. Der Arm 123 beschreibt dann eine Biegung und erstreckt sich dann in Bezug auf eine senkrecht zu den Schwenkachsen S1, S2 erstreckten Ebene parallel zur dem übrigen Kinematikhebel 120, und zwar vorliegend über die Position der ersten Schwenkachse S1 hinaus. Dann ist der Arm 123 weiter gebogen und umgreift dabei die Schwenkachse S1 mit dem Teil, der den Betätigungsabschnitt 122 bildet. Der Arm 123 ist ferner derart gebogen, dass der Betätigungsabschnitt 122 relativ zum übrigen Kinematikhebel 120 in einer Richtung parallel zu den Schwenkachsen S1, S2 versetzt angeordnet ist. Hierdurch kann der erste Kinematikhebel 120 an einer Oberseite der oberen Schiene 130 schwenkbar gelagert sein, während sich der Betätigungsabschnitt 122 zumindest teilweise an einer Seite der oberen Schiene 130 erstreckt.

Die obere Schiene 130 ist mit der unteren Schiene 131 lösbar verriegelt, um ungewollte Verstellbewegungen zu verhindern. Hierzu ist eine Verriegelungsvorrichtung 133 vorgesehen, die im gezeigten Beispiel einen Kamm aufweist, der an der oberen Schiene 130 schwenkbar gelagert ist und in Löcher an der unteren Schiene 131 verriegelnd eingreifen kann. Mittels des an der oberen Schiene 130 bewegbar gelagerten Entriegelungsbolzens 132 ist die Verriegelungsvorrichtung 133 entriegelbar. Vorliegend kann hierzu der Entriegelungsbolzen 132 in einem Schlitz in der oberen Schiene 130 verlagert werden, sodass der Kamm aus den Löchern gehoben wird und eine Relativbewegung der Schienen 130, 131 freigibt.

Der Betätigungsabschnitt 122 des ersten Kinematikhebels 120 ist so geformt, dass er mit einer Funktionsfläche F auf den Entriegelungsbolzen 132 einwirken kann (um ihn wie beschrieben im Schlitz zu verlagern). Die Funktionsfläche F beschreibt eine Funktionskontur. Die Funktionsfläche F ist konkav. Vorliegend ist der erste Kinematikhebel 120 als Stanzbiegeteil ausgebildet und die Funktionsfläche F ist durch eine Stanzfläche ausgebildet. Der Kinematikhebel 120 ist aus einem flachen Material aufgebaut und weist somit schmale Seitenflächen auf. Die Funktionsfläche F wird durch eine der schmalen Seitenflächen gebildet. Der erste Kinematikhebel 120 ist einstückig ausgebildet. In der In Fig. 2A gezeigten Gebrauchsstellung berührt der Betätigungsabschnitt 122 den Entriegelungsbolzen 132 nicht, ist also beabstandet dazu.

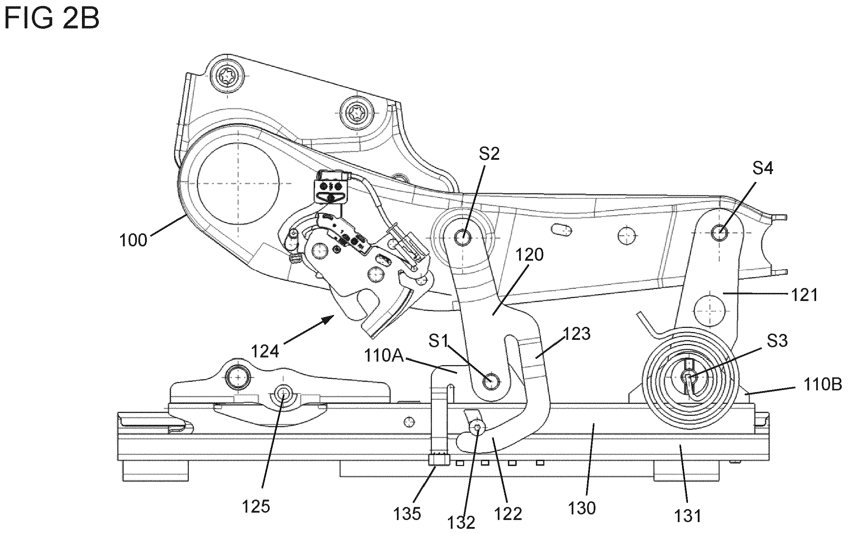

Fig. 2B zeigt einen Zustand, in dem die Verriegelungsvorrichtung 124 der Kinematikeinrichtung 12 entriegelt worden ist und das Sitzteilelement 100 bereits mittels der Kinematikeinrichtung 12 nach vorn und oben verlagert worden ist, bis zur in Fig. 2B gezeigten Stellung. In dieser Stellung ist die Funktionsfläche F des Betätigungsabschnitts 122 gerade in Berührung mit dem Entriegelungsbolzen 132 gelangt. Eine weitere Schwenkbewegung nach vorn hebt den Entriegelungsbolzen 132 an, sodass die Verriegelung der Schienen 130, 131 gelöst wird. Die Schwenkbewegung kann z.B. manuell oder motorisch erfolgen. In der in Fig. 2B gezeigten Stellung ist der erste Kinematikhebel 120 z.B. um 40-50 Grad, insbesondere 44 Grad gegenüber der Gebrauchsstellung (Fig. 2A) verschwenkt.

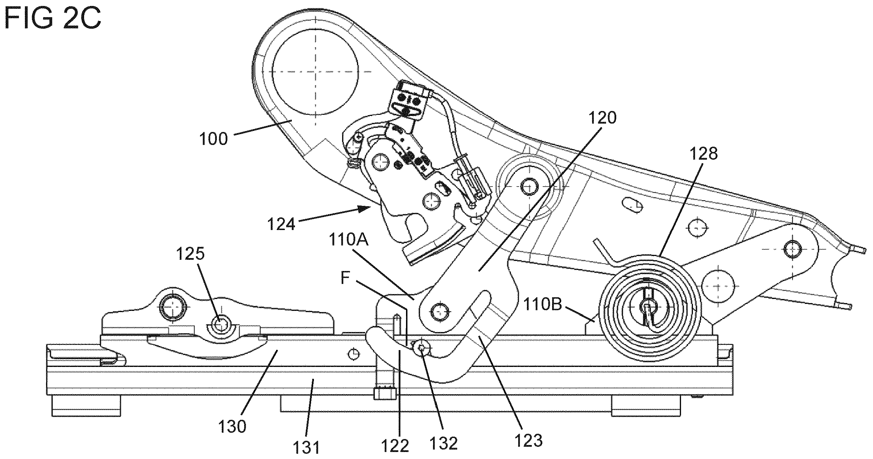

Fig. 2C zeigt die Stellung, in der das Sitzteilelement 100 so weit mittels der Kinematikeinrichtung 12 nach vorn verlagert ist, dass der Entriegelungsbolzen 132 so angehoben ist, dass die Verriegelung der Schienen 130, 131 gelöst ist. Ein weiterer Druck auf den Fahrzeugsitz 1 nach vorn bewirkt somit eine Verschiebung des Sitzteils 10 und des Rückenlehnenteils 15 nach vorn. Damit wird eine besonders große Einstiegsöffnung bereitgestellt. In der in Fig. 2C gezeigten Stellung ist der erste Kinematikhebel 120 z.B. um 90-110 Grad, insbesondere 100 Grad gegenüber der Gebrauchsstellung (Fig. 2A) verschwenkt.

Im Vergleich der Fig. 2A, 2B und 2C ist ersichtlich, dass das Viergelenk der Kinematikeinrichtung 12 so ausgebildet ist, dass das Sitzteilelement 100 bei der Verlagerung vor bzw. zurück zischen der Gebrauchsstellung und der Easy-Entry-Stellung erst angehoben und dann wieder abgesenkt wird. Die Kinematikeinrichtung 12 kann daher auch als "Bunny-Hop-Kinematik" bezeichnet werden. Hierdurch ist eine weite Verlagerung nach vorn in die Easy-Entry-Stellung möglich. Die Kinematikhebel 120, 121 sind nicht parallel ausgerichtet, sondern beschreiben einen Winkel. Hierdurch wird das Sitzteil 10 und das Rückenlehnenteil 15 bei der Bewegung in die Easy-Entry-Stellung nach vorn gekippt, was zusätzlichen Platz schafft. Vorliegend sind die Abstände zwischen den Schwenkachsen S1, S2; S3, S4 des ersten Kinematikhebels 120 und des zweiten Kinematikhebels 121 gleich groß (alternativ ähnlich groß, z.B. misst der eine Kinematikhebel die Länge des anderen Kinematikhebels +/-10%).

Es ist ersichtlich, dass der Kinematikhebel 120 einen Betätigungsabschnitt 122 aufweist, mittels dem das bewegbar gelagerte Element (der Entriegelungsbolzen 132) nur innerhalb eines Teilabschnitts der Bewegung des Kinematikhebels 120 derart betätigbar ist, dass es eine Bewegung der Komponente der weiteren Einrichtung freigibt und/oder bewirkt (hier der oberen Schiene 130 Längsverstelleinrichtung 13 bewirkt). Konkret ist der Entriegelungsbolzen 132 im Teilabschnitt der Bewegung des Kinematikhebels 120 von der Stellung gemäß Fig. 2A bis zur Stellung gemäß Fig. 2B nicht durch den Betätigungsabschnitt 122 betätigbar, und ist dann innerhalb des Teilabschnitts der Bewegung des Kinematikhebels 120 von der Stellung gemäß Fig. 2B bis zur Stellung gemäß Fig. 2C betätigbar.

Durch die Ausgestaltung des ersten Kinematikhebels 120 ist somit kein zusätzliches Bauteil nötig, um beim Überführen des Fahrzeugsitzes in die Easy-Entry-Stellung die Längsverstelleinrichtung 13 zu entriegeln. Der Entriegelungsmechanismus ist zudem besonders robust.

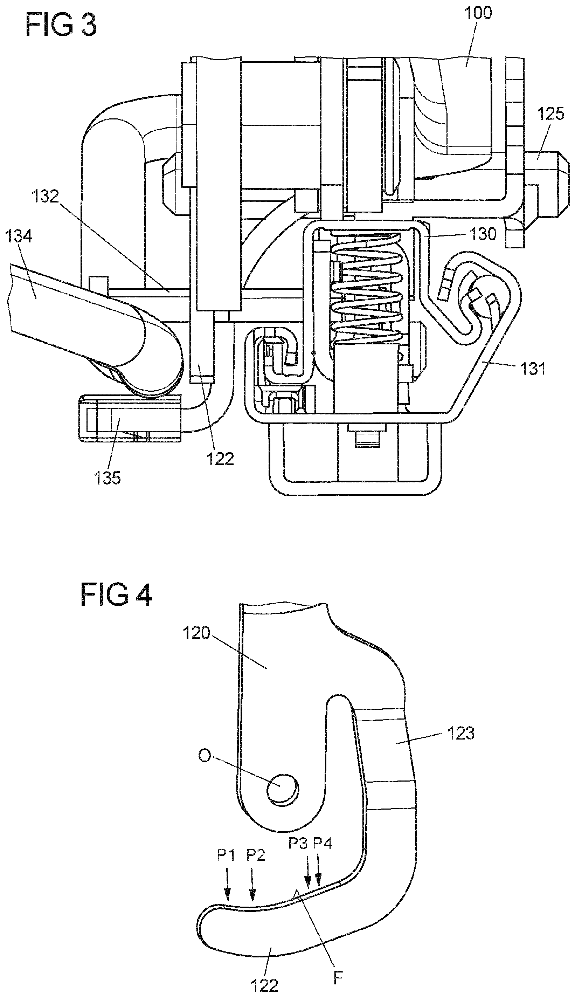

In der Ansicht der Fig. 3 ist zu erkennen, dass der Entriegelungsbolzen 132 so weit vorsteht, dass neben dem Betätigungsabschnitt 122 des ersten Kinematikhebels 120 auch noch ein manueller Entriegelungshebel 134 entriegelnd auf den Entriegelungsbolzen 132 einwirken kann. Ein vom Halter 110A ausgeformter Arm bildet einen Anschlag 135 für den Entriegelungshebel 134. Durch eine Betätigung des Entriegelungshebels 134 kann die Längsverstelleinrichtung 13 unabhängig von der Kinematikeinrichtung 12 entriegelt werden. In Fig. 3 ist ferner eine Feder veranschaulicht, welche den Kamm in die verriegelnde Stellung vorspannt.

Fig. 4 zeigt den unteren Teil des ersten Kinematikhebels 120 im Detail. Dort ist insbesondere veranschaulicht, dass die Funktionsfläche F des ersten Kinematikhebels 120 an verschiedenen Stellen unterschiedliche Krümmungsradien aufweist. Hierbei werden zusammen mit dem Entriegelungsbolzen 132 Reibwinkel ausgebildet, die vom ersten Berührungspunkt an bis zur vollständigen Entriegelung des Entriegelungsbolzens 132 (im gezeigten Beispiel stetig) abnimmt. Konkret ist am Punkt P1 ein Reibwinkel von 22 Grad vorgesehen, am Punkt P2 von 20 Grad, am Punkt P3 von 8 Grad und am Punkt P4 von 4 Grad. Alternativ weist die Funktionsfläche nur einen, zwei oder drei dieser Reibwinkel auf und optional liegt der bzw. liegen die Reibwinkel dieser Punkte in einem Bereich von +/- 1 Grad um die angegebenen Werte. Durch eine derartige Kontur kann der Entriegelungsbolzen 132 klemmfrei betätigt werden, wobei zugleich verhältnismäßig große Toleranzen in der Herstellung ausgeglichen werden können.

Ferner ist eine Öffnung O erkennbar, welche zur Ausbildung der Schwenkachse S1 dient. Hierzu ist die Öffnung O z.B. an einem Lagerelement wie einem Lagerbolzen drehbar gelagert. Ferner ist insbesondere in Fig. 4 gut erkennbar, dass sich der Arm 123 mit dem Betätigungsabschnitt 122, in einer Ebene senkrecht zur Schwenkachse S1 betrachtet, über die erste Schwenkachse S1 hinaus erstreckt, und vorliegend die erste Schwenkachse S1 umgreift. Der Arm 123 mit dem Betätigungsabschnitt 122 durchstößt eine Ebene, die aufgespannt wird durch die Gerade, die die erste und zweite Schwenkachse S1, S2 verbindet, und die durch die (z.B. die erste) Schwenkachse S1 beschriebene Gerade.

Optional (oder in anderen Ausgestaltungen alternativ) ist die Kopfstütze 16 (oder ein anderes verstellbares Teil) mittels des Betätigungsabschnitts 122 bewegbar. Hierzu kann z.B. ein in Fig. 1 veranschaulichter Bowdenzug 160 als bewegbare Komponente vorgesehen sein.

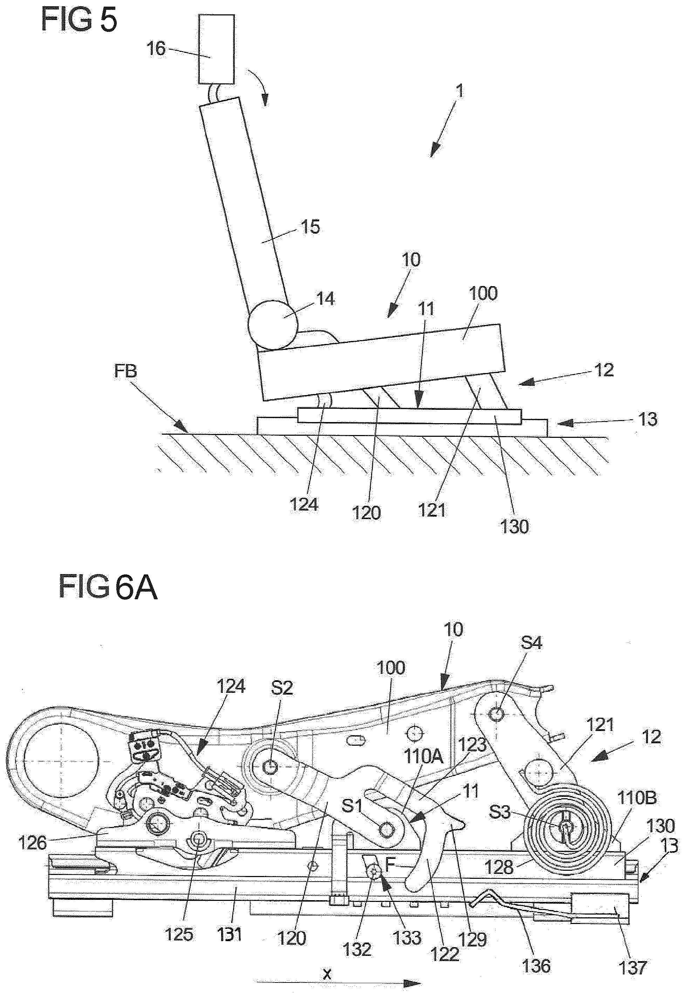

Ein in Fig. 5 schematisch dargestellter Fahrzeugsitz 1 ist ähnlich wie der im Zusammenhang mit Fig. 1 beschriebene Fahrzeugsitz 1 aufgebaut, sodass auf die obigen Ausführungen Bezug genommen wird.

Auch der Fahrzeugsitz 1 umfasst eine Verstelleinrichtung, die konkret als Längsverstelleinrichtung 13 ausgebildet ist. Über die Längsverstelleinrichtung 13 ist das Sitzteil 10 (gemeinsam mit der Kinematikeinrichtung 12, der Basis 11 und dem Rückenlehnenteil 15) längsverstellbar mit einem Fahrzeugboden FB eines Fahrzeugs verbindbar und gemäß Fig. 5 verbunden. Die Längsverstelleinrichtung 13 umfasst eine obere Schiene 130, die an einer unteren Schiene 131 entlang einer Längsrichtung X verschiebbar gelagert ist. Die untere Schiene 131 ist mit dem Fahrzeugboden FB fest verbindbar und gemäß Fig. 5 verbunden. Mittels der Längsverstelleinrichtung 13 Ist der Fahrzeugsitz in Längsrichtung X einstellbar.

Vorliegend dient ein Verstellteil, nämlich die obere Schiene 130, der Längsverstelleinrichtung 13 gemeinsam mit Halterungen 110A, 110B als die Basis 11 für die Kinematikeinrichtung 12.

Eine Verriegelungsvorrichtung 124 der Kinematikeinrichtung 12 sichert den Fahrzeugsitz 1 in einer Gebrauchsstellung, in der der Sitzbenutzer auf dem Sitzteil 10 Platz nehmen kann. Wird diese Verriegelungsvorrichtung 124 gelöst, dann können Kinematikhebel 120, 121 der Kinematikeinrichtung 12 relativ zur Basis 11 verschwenkt werden, sodass der Fahrzeugsitz 1 aus der Gebrauchsstellung in eine demgegenüber vorverlagerte Stellung zur Bereitstellung einer Einstiegsstellung überführt werden kann. Über die Kinematikhebel 120, 121 ist das Sitzteil 10 relativ zur Basis 11 bewegbar mit der Basis 11 verbunden. Optional dient die Kinematikeinrichtung 12 auch zur Verstellung der Sitzhöhe und erlaubt die Einstellung verschiedener Gebrauchspositionen.

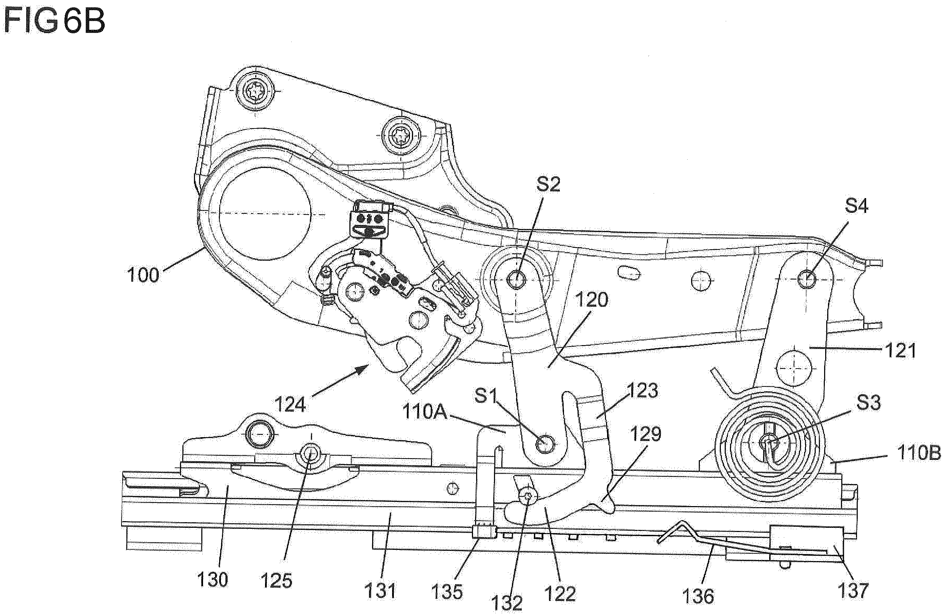

Wie nachfolgend im Zusammenhang mit den Fig. 6A bis 6C im Detail erläutert werden wird, ist der Fahrzeugsitz 1 durch eine Schwenkbewegung mittels der Kinematikeinrichtung 12 und eine Verschiebebewegung mittels der Längsverstelleinrichtung 13 in eine Einstiegsstellung überführbar. Die Einstiegsstellung kann auch als Easy-Entry-Stellung bezeichnet werden.

Fig. 6A zeigt ein Sitzteilelement 100 des Sitzteils 10, welches vorliegend ein Seitenteil eines Sitzrahmens des Sitzteils 10 ausbildet, und die zwei Kinematikhebel 120, 121 der Kinematikeinrichtung 12. Es sei erwähnt, dass das Sitzteilelement 100 alternativ auch relativ zu einem weiteren Teil des Sitzteils 10 verstellbar sein könnte, z.B. als Teil einer absenkbaren Sitzwanne.

Ferner zeigt Fig. 6A die zwei Schienen 130, 131 der Längsverstelleinrichtung 13. Über die Kinematikhebel 120, 121 ist die obere Schiene 130 mit dem Sitzteilelement 100 verbunden.

Es sei an dieser Stelle wieder darauf hingewiesen, dass Fig. 6A eine von zwei Seiten des Fahrzeugsitzes 1 zeigt, wobei der Fahrzeugsitz 1 eine zweite, insbesondere spiegelbildlich aufgebaute zweite Seite umfasst. Die Beschreibung der in Fig. 6A gezeigten Seite gilt analog für die zweite Seite des in Fig. 5 gezeigten Fahrzeugsitzes 1.

Einer der beiden in Fig. 6A veranschaulichten Kinematikhebel 120, 121, im gezeigten Beispiel der (mit Bezug auf die Längsrichtung X) hintere Kinematikhebel 120, wird zur vereinfachten Bezugnahme nachfolgend wieder als erster Kinematikhebel 120 bezeichnet, der andere wieder als zweiter Kinematikhebel 121.

Der erste Kinematikhebel 120 ist auch hier wieder an einer Halterung 110A der Basis 11, welche an der oberen Schiene 130 befestigt (alternativ daran ausgeformt) ist, um eine (erste) Schwenkachse S1 schwenkbar gelagert. Ferner ist der erste Kinematikhebel 120 um eine (zweite) Schwenkachse S2 am Sitzteilelement 100 schwenkbar gelagert. Der zweite Kinematikhebel 121 ist um eine (dritte) Schwenkachse S3 an einer Halterung 110B der Basis 11, welche an der oberen Schiene 130 befestigt (alternativ daran ausgeformt) ist, schwenkbar gelagert. Des Weiteren ist der zweite Kinematikhebel 121 um eine (vierte) Schwenkachse S4 schwenkbar am Sitzteilelement 100 gelagert. Gemeinsam bilden die Basis 11, die beiden Kinematikhebel 120, 121 und das Sitzteilelement 100 ein Viergelenk aus.

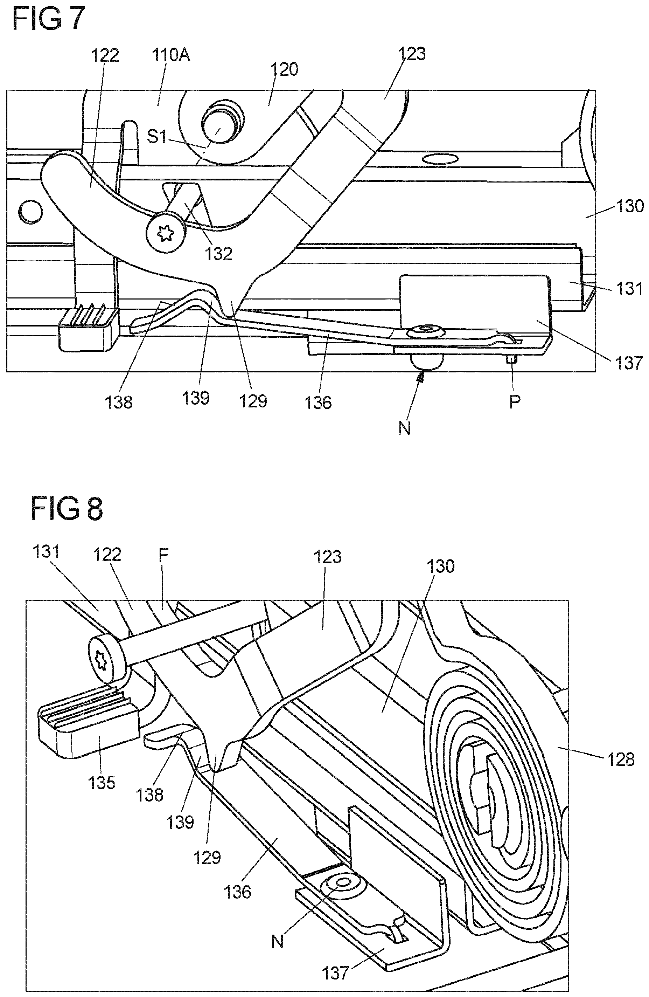

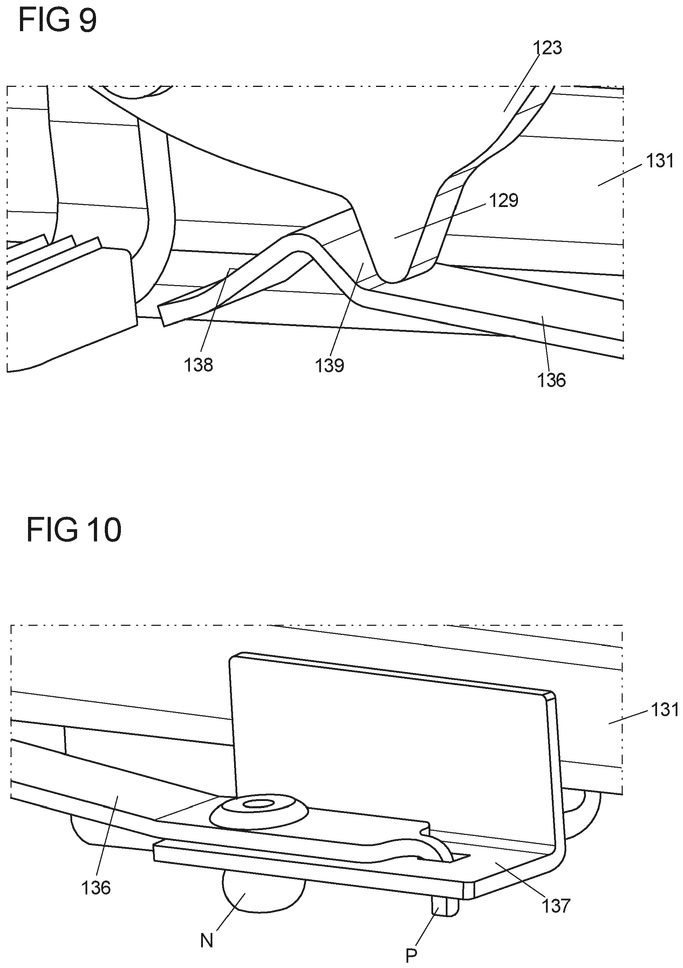

Der erste Kinematikhebel 120 weist einen Betätigungsabschnitt 122 auf, der nachfolgend näher erläutert werden wird. Ferner weist der erste Kinematikhebel 120 einen Verriegelungsabschnitt 129 auf, der mit einem Gegenverriegelungselement 136 verrastend zusammenwirkt und weiter unten mit Bezug auf die Fig. 7 bis 10 im Detail erläutert werden wird.

Fig. 6A zeigt die Gebrauchsstellung. In der Gebrauchsstellung ist die Verriegelungsvorrichtung 124 mit einem an der oberen Schiene 130 befestigten Gegenverriegelungselement, hier beispielhaft einem Bolzen 125, verriegelt. Das Gegenverriegelungselement, also hier der Bolzen 125, ist an einer Halterung 126 befestigt, welche wiederum an der oberen Schiene 130 befestigt ist. Wird die (in Längsrichtung X gesehen) hinter dem ersten Kinematikhebel 120 angeordnete Verriegelungsvorrichtung 124 der Kinematikeinrichtung 12 entriegelt, dann kann das Sitzteilelement 100 entsprechend einer durch die Kinematikeinrichtung 12 vorgegebenen Verstellbahn verstellt werden. Konkret kann das Sitzteilelement 100, und damit das Sitzteil 10, wie oben beschrieben in die vorgeschwenkte Stellung überführt werden. Diese Bewegung wird vorliegend unterstützt durch eine vorgespannte Feder 128, welche das Sitzteilelement 100 in Richtung der Easy-Entry-Stellung vorspannt. Die Feder 128 ist in Form einer um die (dritte) Schwenkachse S3 an der Halterung 110B des zweiten Kinematikhebels 120 erstreckten Spiralfeder ausgebildet. Die Feder 128 stützt sich an der Halterung 110B und am zweiten Kinematikhebel 121 ab.

Der erste Kinematikhebel 120 weist den Betätigungsabschnitt 122 auf, mittels dem ein Entriegelungselement, hier in Form eines Entriegelungsbolzens 132, derart betätigbar ist, dass eine Bewegung der oberen Schiene 130 relativ zur unteren Schiene 131 freigegeben wird. Somit ist ein Entriegelungsmechanismus in den Kinematikhebel integriert. Hierdurch sind Kosten-, Bauraum- und Gewichtsersparnisse gegenüber einer separaten Entriegelung möglich.

Der optionale Betätigungsabschnitt 122 an einem vom übrigen Kinematikhebel 120 abstehenden Arm 123 ausgebildet. Der Arm 123 steht von einem Materialbereich des ersten Schwenkarms 120 zwischen den Schwenkachsen S1, S2 seitlich ab. Der Arm 123 beschreibt dann eine Biegung und erstreckt sich dann in Bezug auf eine senkrecht zu den Schwenkachsen S1, S2 erstreckten Ebene parallel zur dem übrigen Kinematikhebel 120, und zwar vorliegend über die Position der ersten Schwenkachse S1 hinaus. Dann ist der Arm 123 weiter gebogen und umgreift dabei die Schwenkachse S1 mit dem Teil, der den Betätigungsabschnitt 122 bildet. Der Arm 123 ist ferner derart gebogen, dass der Betätigungsabschnitt 122 relativ zum übrigen Kinematikhebel 120 in einer Richtung parallel zu den Schwenkachsen S1, S2 versetzt angeordnet ist. Hierdurch kann der erste Kinematikhebel 120 an einer Oberseite der oberen Schiene 130 schwenkbar gelagert sein, während der Betätigungsabschnitt 122 zumindest teilweise an einer Seite der oberen Schiene 130 angeordnet ist.

Die obere Schiene 130 ist mit der unteren Schiene 131 lösbar verriegelt, um ungewollte Verstellbewegungen zu verhindern. Hierzu ist eine Verriegelungsvorrichtung 133 vorgesehen, die im gezeigten Beispiel einen Kamm aufweist, der an der oberen Schiene 130 schwenkbar gelagert ist und in Löcher an der unteren Schiene 131 verriegelnd eingreifen kann. Mittels des Entriegelungsbolzens 132 ist die Verriegelungsvorrichtung 133 entriegelbar. Vorliegend kann hierzu der Entriegelungsbolzen 132 in einem Schlitz in der oberen Schiene 130 verlagert werden, sodass der Kamm aus den Löchern gehoben wird und eine Relativbewegung der Schienen 130, 131 freigibt.

Hinsichtlich der Fig. 6A-6C wird im Übrigen auf die obigen Ausführungen zu Fig. 2A-2C verwiesen.

Ein vom Halter 110A ausgeformter Arm bildet einen Anschlag 135 für einen zusätzlichen manuellen Entriegelungshebel, durch dessen Betätigung die Längsverstelleinrichtung 13 unabhängig von der Kinematikeinrichtung 12 entriegelt werden kann.

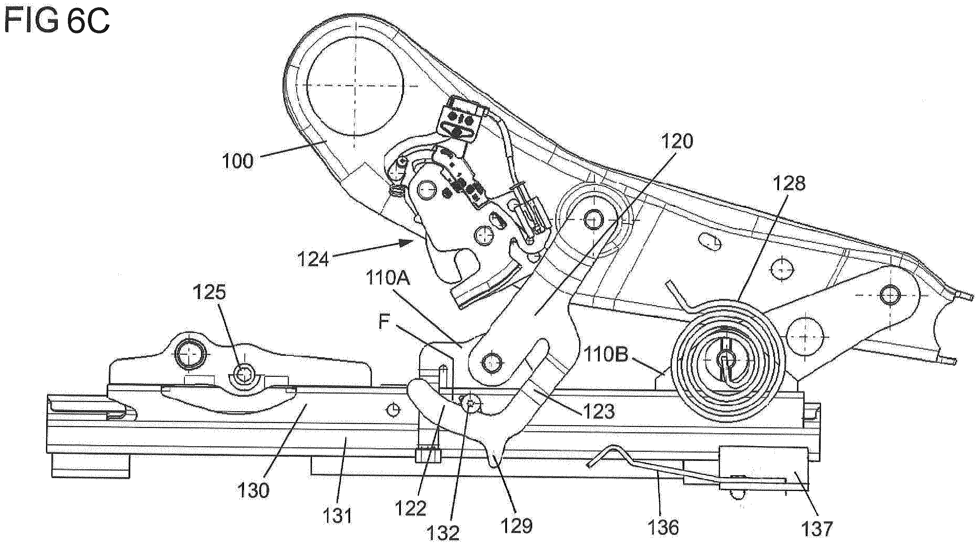

Die Fig. 7 bis 10 zeigen die obere Schiene 130 der Längsverstelleinrichtung 13 in der Easy-Entry-Stellung, in der der Verriegelungsabschnitt 129 des ersten Kinematikhebels 120 mit dem Gegenverriegelungselement 136 zusammenwirkt, und zwar vorliegend verrastet ist. Wie insbesondere anhand von Fig. 7 zu erkennen, befindet sich der erste Kinematikhebel 120 dabei in der vorgeschwenkten Stellung entsprechend Fig. 6C. Allerdings ist die obere Schiene 130 der Längsverstelleinrichtung 13 in einer relativ zur unteren Schiene 131 im Vergleich zur Stellung entsprechend Fig. 6A bis 6C vorgeschobenen Stellung angeordnet. Konkret ist in den Fig. 7 bis 10 die vordere Endlage der oberen Schiene 130 gezeigt.

Das Gegenverriegelungselement 136 ist vorliegend als Blattfeder ausgebildet und weist ein freies Ende mit einer Einführschräge 138 und einer Rastfläche 139 auf. Wird die obere Schiene 130 ausgehend von der Stellung gemäß Fig. 6C bis in die vordere Endlage verschoben, dann erreicht kurz vor der Endlage der Verriegelungsabschnitt 129 des ersten Kinematikhebels 120 die Einführschräge 138 und gleitet daran entlang. Dabei weicht das freie Ende des Gegenverriegelungselements 136 federelastisch aus. Hierzu erstreckt sich das längliche Gegenverriegelungselement 136 hauptsächlich in einer Richtung parallel zur Längsrichtung X. Bei einer weitergehenden Verschiebebewegung der oberen Schiene 130 erreicht der Verriegelungsabschnitt 129 die Rastfläche 139 und das freie Ende des Gegenverriegelungselements schnappt federelastisch zurück. Sodann ist der Verriegelungsabschnitt 129 mit dem Gegenverriegelungselement 136 verrastet und verhindert, dass die obere Schiene 130 ungewollt zurück verschoben wird. Auf diese Weise wird eine haptisch klar erkennbare Verrastung bewirkt und der Fahrzeugsitz 1 wird an einer ungewollten Verlagerung zurück gehindert.

Der Verriegelungsabschnitt 129 weist zwei V-förmig zulaufende Funktionsflächen auf. Die Funktionsflächen sind an Schnittflächen des Stanzbiegeteils ausgebildet. Die eine Funktionsfläche ist dazu ausgebildet, an der Einführschräge 138 entlang zu gleiten. Die andere Funktionsfläche liegt in der Easy-Entry-Stellung an der Rastfläche 139 an. Die Rastfläche 139 und die anliegende Funktionsfläche sind gegenüber der Verstellrichtung der Längsverstelleinrichtung 13, also der Längsrichtung X, geneigt. Dadurch ist es zwar erschwert, aber dennoch möglich, die Verrastung durch Verschieben der oberen Schiene 130 relativ zur unteren Schiene wieder zu lösen.

Die Verrastung unterstützt ferner bei einem Zug am Fahrzeugsitz 1, z.B. am Rückenlehnenteil 15, dass mit einer Verlagerung der oberen Schiene 130 relativ zur unteren Schiene 131 zunächst die Kinematikeinrichtung 12 wieder zurück in die Gebrauchsstellung verschwenkt wird. Dabei schwenkt auch der erste Kinematikhebel 120 und schwenkt den Verriegelungsabschnitt 129 aus der Anlage mit der Rastfläche 139 heraus. Somit wird die Verrastung in besonders leichtgängiger und komfortabler Weise durch Zurückschwenken der Kinematikeinrichtung 12 gelöst.

Diese Ausgestaltung erlaubt es zudem, zur Komforteinstellung die Längsverstelleinrichtung bis in die vorderste Endlage zu verstellen, ohne dass es ungewollt zu einem Verrasten kommt, da dies nur bei vorgeschwenkter Kinematikeinrichtung 12 bewirkt wird. Befindet sich die Kinematikeinrichtung 12 in der Gebrauchsstellung, ist der Verriegelungsabschnitt 129 versetzt zum Gegenverriegelungselement 136 angeordnet und nicht damit verrastbar.

Das Gegenverriegelungselement 136 bildet einen umgebogenen Pin P aus, der als Verdrehsicherung in einen Durchbruch an einer Halterung 137 eingesteckt ist. Ferner ist das Gegenverriegelungselement 136 mit der Halterung 137 mittels eines Niets N befestigt. Die Halterung 137 ist an der unteren Schiene 131 befestigt, alternativ dazu am Fahrzeugboden FB.

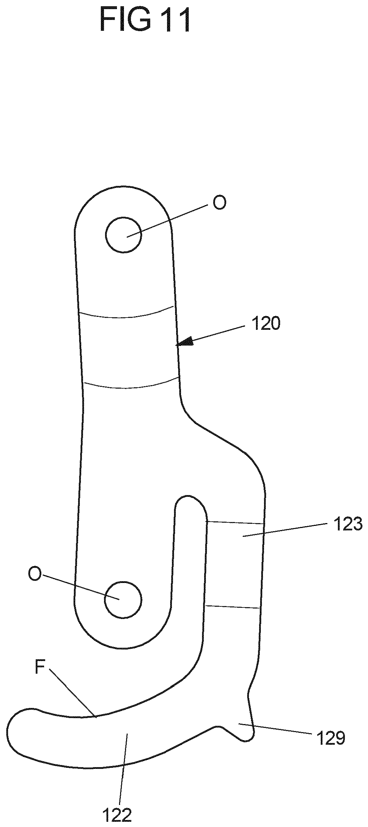

Fig. 11 zeigt den ersten Kinematikhebel 120 im Detail. Darin ist veranschaulicht, dass der vom übrigen Kinematikhebel 120 abstehende Arm 123 den Verriegelungsabschnitt 129 als einen Vorsprung ausbildet, der im gezeigten Beispiel zum offenen Ende hin verjüngt ist. An den Verriegelungsabschnitt 129 grenzt der Betätigungsabschnitt 122 an, der das Ende des Arms 123 bildet.

Ferner sind Öffnungen O erkennbar, welche zur Ausbildung der Schwenkachsen S1, S2 dienen. Hierzu ist jede der Öffnungen O z.B. an einem Lagerelement wie einem Lagerbolzen drehbar gelagert.

Des Weiteren ist insbesondere in Fig. 11 gut erkennbar, dass sich der Arm 123 mit dem Betätigungsabschnitt 122 und dem Verriegelungsabschnitt 129, in einer Ebene senkrecht zur ersten Schwenkachse S1 betrachtet, über die Schwenkachse S1 hinaus erstreckt, und vorliegend die erste Schwenkachse S1 umgreift. Der Arm 123 mit dem Betätigungsabschnitt 122 und dem Verriegelungsabschnitt 129 durchstößt eine Ebene, die aufgespannt wird durch die Gerade, die die erste und zweite Schwenkachse S1, S2 verbindet, und die durch die (z.B. die erste) Schwenkachse S1 beschriebene Gerade.

Die Funktionsfläche F ist optional gemäß Fig. 4 ausgebildet.

### Bezugszeichenliste

- 1: Fahrzeugsitz
- 10: Sitzteil
- 100: Sitzteilelement
- 11: Basis
- 110A, 110B: Halterung
- 12: Kinematikeinrichtung
- 120: (erster) Kinematikhebel
- 121: (zweiter) Kinematikhebel
- 122: Betätigungsabschnitt
- 123: Arm
- 124: Verriegelungsvorrichtung
- 125: Bolzen
- 126: Halterung
- 128: Feder
- 129: Verriegelungsabschnitt
- 13: (Längs-)Verstelleinrichtung; weitere Einrichtung
- 130: Komponente; Verstellteil
- 131: Komponente; Verstellteil
- 132: Element; Entriegelungselement
- 133: Verriegelungsvorrichtung
- 134: Entriegelungshebel
- 135: Anschlag
- 136: Gegenverriegelungselement
- 137: Halterung
- 138: Einführschräge
- 139: Rastfläche
- 14: Drehbeschlaganordnung
- 15: Rückenlehnenteil
- 16: Kopfstütze
- 160: Bowdenzug
- F: Funktionsfläche
- FB: Fahrzeugboden
- N: Niet
- O: Öffnung
- P: Pin
- S1-S4: Schwenkachse
- X: Längsrichtung

## Patentansprüche

1. Fahrzeugsitz (1), umfassend:
- ein Sitzteil (10) mit einem Sitzteilelement (100),
- eine Basis (11),
- eine Kinematikeinrichtung (12) mit einem Kinematikhebel (120), über den zumindest das Sitzteilelement (100) relativ zur Basis (11) bewegbar mit der Basis (11) verbunden ist, und
- eine weitere Einrichtung (13) mit einer unabhängig vom Kinematikhebel (120) bewegbar gelagerten Komponente (130; 16),
**dadurch gekennzeichnet, dass**
der Kinematikhebel (120) einen Betätigungsabschnitt (122) aufweist, mittels dem ein bewegbar gelagertes Element (132; 160) innerhalb eines Teilabschnitts der Bewegung des Kinematikhebels (120) derart betätigbar ist, dass es eine Bewegung der Komponente (130; 16) der weiteren Einrichtung (13) freigibt und/oder bewirkt.

2. Fahrzeugsitz (1) nach Anspruch 1, **dadurch gekennzeichnet, dass** zumindest das Sitzteilelement (100) über den Kinematikhebel (120) an der Basis (11) abgestützt ist.

3. Fahrzeugsitz (1) nach Anspruch 1 oder 2, **dadurch gekennzeichnet, dass** das durch den Betätigungsabschnitt (122) des Kinematikhebels (120) betätigbare Element (132) Teil einer Verriegelungsvorrichtung (133) oder einer Betätigungsvorrichtung ist.

4. Fahrzeugsitz (1) nach Anspruch 3, **dadurch gekennzeichnet, dass** die Verriegelungsvorrichtung (133) ferner einen manuell betätigbaren Entriegelungshebel (134) umfasst, mittels dem unabhängig von der Stellung des Kinematikhebels (120) ebenfalls das Element (132) betätigbar ist.

5. Fahrzeugsitz (1) nach einem der vorhergehenden Ansprüche, **dadurch gekennzeichnet, dass** der Fahrzeugsitz (1) mittels der Kinematikeinrichtung (12) zwischen zumindest einer einsitzbaren Gebrauchsstellung und einer Easy-Entry-Stellung und/oder zwischen mehreren einsitzbaren Gebrauchsstellungen bewegbar ist.

6. Fahrzeugsitz (1) nach Anspruch 5, **dadurch gekennzeichnet, dass** der Betätigungsabschnitt (122) des Kinematikhebels (120) in der Gebrauchsstellung beabstandet zum betätigbaren Element (132) angeordnet ist und in der Easy-Entry-Stellung in Berührung mit dem betätigbaren Element (132) steht.

7. Fahrzeugsitz (1) nach Anspruch 5 oder 6, **dadurch gekennzeichnet, dass** die Kinematikeinrichtung (12) ein Verriegelungselement (124) umfasst, mittels dem die Kinematikeinrichtung (12) in der zumindest einen Gebrauchsstellung verriegelbar ist, wobei das Verriegelungselement (124) beabstandet vom durch den Betätigungsabschnitt (122) des Kinematikhebels (120) betätigbaren Element (132) ist.

8. Fahrzeugsitz (1) nach einem der vorhergehenden Ansprüche, **dadurch gekennzeichnet, dass** die Kinematikeinrichtung (12) ein Viergelenk ausbildet.

9. Fahrzeugsitz (1) nach einem der vorhergehenden Ansprüche, **dadurch gekennzeichnet, dass** die weitere Einrichtung (13) eine Verstelleinrichtung ist und mit der Komponente (130) und einer weiteren Komponente (131) zwei relativ zueinander bewegbare Verstellteile (130, 131) umfasst.

10. Fahrzeugsitz (1) nach Anspruch 9, **dadurch gekennzeichnet, dass** die weitere Einrichtung (13) eine Längsverstelleinrichtung ist und die zwei relativ zueinander bewegbaren Verstellteile (130, 131) relativ zueinander verschiebbar gelagert sind.

11. Fahrzeugsitz (1) nach Anspruch 9 oder 10, **dadurch gekennzeichnet, dass** das betätigbare Element (132) infolge einer Betätigung durch den Betätigungsabschnitt (122) des Kinematikhebels (120) aus einer die Verstellteile (130, 131) miteinander verriegelnden Verriegelungsstellung in eine Entriegelungsstellung bewegbar ist, in der die Verstellteile (130, 131) relativ zueinander bewegbar sind.

12. Fahrzeugsitz (1) nach einem der Ansprüche 9 bis 11, **dadurch gekennzeichnet, dass** eines der Verstellteile (130) zumindest einen Teil der Basis (11) ausbildet und/oder fest mit der Basis (11) verbunden ist.

13. Fahrzeugsitz (1) nach einem der vorhergehenden Ansprüche, **dadurch gekennzeichnet, dass** der Betätigungsabschnitt (122) an einem vom übrigen Kinematikhebel (120) abstehenden Teil ausgebildet ist, wobei der abstehende Teil des Kinematikhebels (120) hakenförmig ausgebildet ist.

14. Fahrzeugsitz (1) nach einem der vorhergehenden Ansprüche, **dadurch gekennzeichnet, dass** der Betätigungsabschnitt (122) eine Funktionsfläche (F) aufweist, die bei einer Betätigung am betätigbaren Element (132) entlang gleitet, insbesondere wobei die Funktionsfläche (F) des Betätigungsabschnitts (122) mit dem Element (132) der weiteren Einrichtung (13) in einer Richtung betrachtet stetig kleiner werdende Reibwinkel ausbildet.

15. Fahrzeugsitz (1) nach Anspruch 14, **dadurch gekennzeichnet, dass** der Kinematikhebel (120) über zwei Schwenklager (S1, S2) schwenkbar gelagert ist, wobei die Funktionsfläche (F) zu einem der Schwenklager (S2) einen größeren Abstand aufweist als die beiden Schwenklager (S1, S2) zueinander.

## Claims

1. A vehicle seat (1), comprising:
- a seat part (10) with a seat part element (100),
- a base (11),
- a kinematic device (12) with a kinematic lever (120) via which at least the seat part element (100) is movably connected to the base (11) relative to the base (11), and
- a further device (13) with a component (130; 16) movably mounted independently of the kinematic lever (120),
**characterized in that**
the kinematic lever (120) includes an actuating portion (122) by means of which a movably mounted element (132; 160) can be actuated (132; 160) within a subsection of the movement of the kinematic lever (120) in such a way that it enables and/or causes a movement of the component (130; 16) of the further device (13).

2. The vehicle seat (1) according to claim 1, **characterized in that** at least the seat part element (100) is supported on the base (11) via the kinematic lever (120).

3. The vehicle seat (1) according to claim 1 or 2, **characterized in that** the element (132) to be actuated by the actuating portion (122) of the kinematic lever (120) is part of a locking device (133) or an actuating device.

4. The vehicle seat (1) according to claim 3, **characterized in that** the locking device (133) furthermore comprises a manually actuatable unlocking lever (134) by means of which the element (132) likewise can be actuated independently of the position of the kinematic lever (120).

5. The vehicle seat (1) according to any of the preceding claims, **characterized in that** by means of the kinematic device (12) the vehicle seat (1) can be moved between at least one reclining position of use and an easy-entry position and/or between several reclining positions of use.

6. The vehicle seat (1) according to claim 5, **characterized in that** in the position of use the actuating portion (122) of the kinematic lever (120) is arranged at a distance to the actuatable element (132) and in the easy-entry position is in contact with the actuatable element (132).

7. The vehicle seat (1) according to claim 5 or 6, **characterized in that** the kinematic device (12) comprises a locking element (124) by means of which the kinematic device (12) can be locked in the at least one position of use, wherein the locking element (124) is spaced apart from the element (132) to be actuated by the actuating portion (122) of the kinematic lever (120).

8. The vehicle seat (1) according to any of the preceding claims, **characterized in that** the kinematic device (12) forms a four-bar linkage.

9. The vehicle seat (1) according to any of the preceding claims, **characterized in that** the further device (13) is an adjusting device and with the component (130) and a further component (131) comprises two adjustment parts (130, 131) movable relative to each other.

10. The vehicle seat (1) according to claim 9, **characterized in that** the further device (13) is a longitudinal adjustment device and the two adjustment parts (130, 131) movable relative to each other are shiftably mounted relative to each other.

11. The vehicle seat (1) according to claim 9 or 10, **characterized in that** as a result of an actuation by the actuating portion (122) of the kinematic lever (120) the actuatable element (132) can be moved from a locking position locking the adjustment parts (130, 131) to each other into an unlocking position in which the adjustment parts (130, 131) are movable relative to each other.

12. The vehicle seat (1) according to any of claims 9 to 11, **characterized in that** one of the adjustment parts (130) forms at least part of the base (11) and/or is firmly connected to the base (11).

13. The vehicle seat (1) according to any of the preceding claims, **characterized in that** the actuating portion (122) is formed on a part protruding from the remaining kinematic lever (120), wherein the protruding part of the kinematic lever (120) is of hook-shaped design.

14. The vehicle seat (1) according to any of the preceding claims, **characterized in that** the actuating portion (122) includes a functional surface (F) which during an actuation slides along the actuatable element (132), in particular wherein the functional surface (F) of the actuating portion (122) forms steadily decreasing friction angles with the element (132) of the further device (13) as seen in one direction.

15. The vehicle seat (1) according to claim 14, **characterized in that** the kinematic lever (120) is pivotally mounted via two pivot bearings (S1, S2), wherein the functional surface (F) has a greater distance to one of the pivot bearings (S2) than the two pivot bearings (S1, S2) to each other.

## Revendications

1. Siège de véhicule (1), comprenant :
- une partie de siège (10) avec un élément de partie de siège (100),
- une base (11),
- un système cinématique (12) avec un levier cinématique (120) par l'intermédiaire duquel au moins l'élément de partie de siège (100) est relié à la base (11) de manière mobile par rapport à la base (11), et
- un autre système (13) avec un composant (130 ; 16) monté de manière mobile indépendamment du levier cinématique (120),
**caractérisé en ce que**
le levier cinématique (120) présente une section d'actionnement (122) au moyen de laquelle un élément (132 ; 160) monté mobile est actionnable au sein d'une sous-section du mouvement du levier cinématique (120) de telle sorte qu'il libère et/ou provoque un mouvement du composant (130 ; 16) de l'autre système (13).

2. Siège de véhicule (1) selon la revendication 1, **caractérisé en ce qu'**au moins l'élément de partie de siège (100) est soutenu par le levier cinématique (120) sur la base (11).

3. Siège de véhicule (1) selon la revendication 1 ou 2, **caractérisé en ce que** l'élément (132) actionnable par la section d'actionnement (122) du levier cinématique (120) fait partie d'un dispositif de verrouillage (133) ou d'un dispositif d'actionnement.

4. Siège de véhicule (1) selon la revendication 3, **caractérisé en ce que** le dispositif de verrouillage (133) comprend en outre un levier de déverrouillage (134) actionnable manuellement, au moyen duquel l'élément (132) est également actionnable indépendamment de la position du levier cinématique (120).

5. Siège de véhicule (1) selon l'une quelconque des revendications précédentes, **caractérisé en ce que** le siège de véhicule (1) peut être déplacé au moyen du système cinématique (12) entre au moins une position d'utilisation assise et une position Easy-Entry et/ou entre plusieurs positions d'utilisation assises.

6. Siège de véhicule (1) selon la revendication 5, **caractérisé en ce que** la section d'actionnement (122) du levier cinématique (120) est disposée dans la position d'utilisation éloignée de l'élément actionnable (132) et est en contact avec l'élément (132) actionnable dans la position Easy-Entry.

7. Siège de véhicule (1) selon la revendication 5 ou 6, **caractérisé en ce que** le système cinématique (12) comprend un élément de verrouillage (124) au moyen duquel le système cinématique (12) peut être verrouillé dans l'au moins une position d'utilisation, dans lequel l'élément de verrouillage (124) est éloigné de l'élément (132) actionnable par la section d'actionnement (122) du levier cinématique (120).

8. Siège de véhicule (1) selon l'une quelconque des revendications précédentes, **caractérisé en ce que** le système cinématique (12) forme un quadrilatère articulé.

9. Siège de véhicule (1) selon l'une quelconque des revendications précédentes, **caractérisé en ce que** l'autre système (13) est un système de réglage et comprend avec le composant (130) et un autre composant (131) deux pièces de réglage (130, 131) mobiles l'une par rapport à l'autre.

10. Siège de véhicule (1) selon la revendication 9, **caractérisé en ce que** l'autre système (13) est un système de réglage longitudinal et que les deux pièces de réglage (130, 131) mobiles l'une par rapport à l'autre sont montées de manière coulissante l'une par rapport à l'autre.

11. Siège de véhicule (1) selon la revendication 9 ou 10, **caractérisé en ce que** l'élément (132) actionnable peut être déplacé à la suite d'un actionnement par la section d'actionnement (122) du levier cinématique (120) à partir d'une position de verrouillage verrouillant les pièces de réglage (130, 131) entre elles dans une position de déverrouillage dans laquelle les pièces de réglage (130, 131) peuvent être déplacées l'une par rapport à l'autre.

12. Siège de véhicule (1) selon l'une quelconque des revendications 9 à 11, **caractérisé en ce que** l'une des pièces de réglage (130) réalise au moins une partie de la base (11) et/ou est solidaire de la base (11).

13. Siège de véhicule (1) selon l'une quelconque des revendications précédentes, **caractérisé en ce que** la section d'actionnement (122) est réalisée sur une partie en saillie du reste du levier cinématique (120), dans lequel la partie en saillie du levier cinématique (120) est réalisée en forme de crochet.

14. Siège de véhicule (1) selon l'une quelconque des revendications précédentes, **caractérisé en ce que** la section d'actionnement (122) présente une surface fonctionnelle (F) qui glisse le long de l'élément (132) actionnable lors d'un actionnement, en particulier dans lequel la surface fonctionnelle (F) de la section d'actionnement (122) réalise avec l'élément (132) de l'autre système (13) des angles de friction de plus en plus petits vu dans une direction.

15. Siège de véhicule (1) selon la revendication 14, **caractérisé en ce que** le levier cinématique (120) est monté de manière pivotante par l'intermédiaire de deux paliers pivotants (S1, S2), dans lequel la surface fonctionnelle (F) présente par rapport à l'un des paliers pivotants (S2) une distance plus grande que les deux paliers pivotants (S1, S2) l'un par rapport à l'autre.
